# EUROPEAN PATENT SPECIFICATION

(11) **EP 1 977 668 B1**
(45) Date of publication and mention of the grant of the patent: **26.08.2009**
(21) Application number: 07425200.8
(22) Date of filing: 05.04.2007
(51) Int. Cl.: A47J 31/44

(54) **A device for heating liquids by means of steam**
Vorrichtung zum Erhitzen von Flüssigkeiten mit Dampf
Dispositif pour chauffer des liquides à l'aide de vapeur

(43) Date of publication of application: 08.10.2008
(73) Proprietor: Gruppo Cimbali S.p.A., 20082 Binasco (MI) (IT)
(72) Inventor: Coccia, Andrea, 20082 Binasco (MI) (IT); Sala, Dario, 20082 Binasco (MI) (IT)
(74) Representative: Perani, Aurelio

(56) References cited:
- EP-A- 1 707 090
- EP-A1- 0 813 834
- DE-A1- 3 838 235
- DE-A1- 19 705 633
- DE-U1- 29 817 116
- FR-A- 2 875 117

## Description

The present invention relates to a device for heating a liquid by means of steam, the device comprising a body provided with an internal cavity into which ducts open for admitting a flow of liquid to be heated, for admitting a flow of steam, and for drawing off a flow of heated liquid, respectively.

The liquid to be heated is, in particular but not exclusively, a liquid for making a hot beverage and, in addition to water, may therefore be milk or a flavoured liquor for punch.

The invention also relates to a method of heating a liquid of the type indicated above with the use of steam as heating means.

In particular, both the heating device and the heating method of the present invention are preferably but not exclusively for use in espresso coffee machines or in automatic beverage-dispensing machines.

It is known that machines of the type indicated above have a high degree of automation of all of their functions, with the result that it is increasingly often necessary to have the beverage-preparation liquids, usually water or milk, available quickly at different temperatures and flow-rates, according to the characteristics of the methods for the preparation of each beverage.

Methods of heating the beverage-making liquid by condensation of steam as described, for example, in the Applicant's European patent application EP 05425738.2, have been found effective for this purpose.

However, these methods are implemented by devices in which the beverage-making liquid and the steam are mixed by the convergence of two ducts which define, at their intersection, a cavity in which the beverage-making liquid is heated; once heated, the liquid is drawn off from the device through a suitable outlet duct directed towards a beverage-making chamber.

It has been found in practice that, if the beverage-making liquid is heated simply by causing it to converge with the steam in a T-connector in which the liquid to be heated is supplied transversely relative to the flow of steam, since the flow of steam is aligned with the heated output flow, the temperatures reached in the heated liquid are not proportional to the amount of steam supplied to the connector.

This disadvantage arises particularly when, in order to make a predetermined beverage, for example, chocolate, the flow-rate of water supplied to the connector is less than the maximum flow-rate permitted by the duct.

Since such a reduced flow-rate does not completely fill the supply and outlet ducts, some of the steam passes beyond the convergence cavity without condensing in the water passing through.

Even if the steam and the beverage-making liquid are caused to converge by a device in which the flow of the liquid to be heated is supplied to the convergence cavity in a direction substantially parallel to the direction of the flow of steam with the device operating as if it were an ejector, disadvantages are encountered which make the use of such a device inadvisable.

In fact, although performance with respect to high temperatures is more proportional than that achieved with a device using a T-connector, for beverages which require particular flow-rates of the beverage-making liquid for optimal preparation, flow instabilities occur alternating with explosions of steam towards the output duct, particularly with horizontal arrangements of the steam-flow direction; the problem is even worse if the output end of the duct for the heated liquid is higher than the input end of the duct for the liquid to be heated.

These phenomena arise because the beverage-making liquid to be heated has a greater mass than the steam. In fact, these phenomena adversely affect the characteristics of the heated liquid and consequently the organoleptic characteristics of the beverage produced. When the flow of liquid to be heated is arranged transversely relative to the steam flow, it causes the steam to condense, completely floods the convergence cavity, and flows back into the steam-inlet duct. At a certain moment, when the heat yielded by the condensation of the steam brings the liquid to boiling point, it produces an explosive thrust in the opposite direction towards the output end of the heated-liquid duct and hence towards the beverage-making chamber, with obvious adverse effects.

In order to reduce the above mentioned inconveniences, it is known to cause the steam simply to flow transversely relative to the direction of the flow of the liquid to be heated.

An example of this known solution is disclosed in DE-A-3838235,

However, according to this prior art, the steam flow impacts directly on the stream of the liquid to be heated causing turbulence in the flow and an uneven distribution of the heat inside the stream of the liquid.

The object of the present invention is therefore to provide a device for heating a beverage-making liquid to the appropriate temperature and with the appropriate flow-rate for each type of beverage.

This object is achieved by a device according to appended Claim 1.

The invention will now be described in greater detail with reference to an embodiment thereof which is provided by way of non-limiting example and illustrated in the appended drawings, in which:

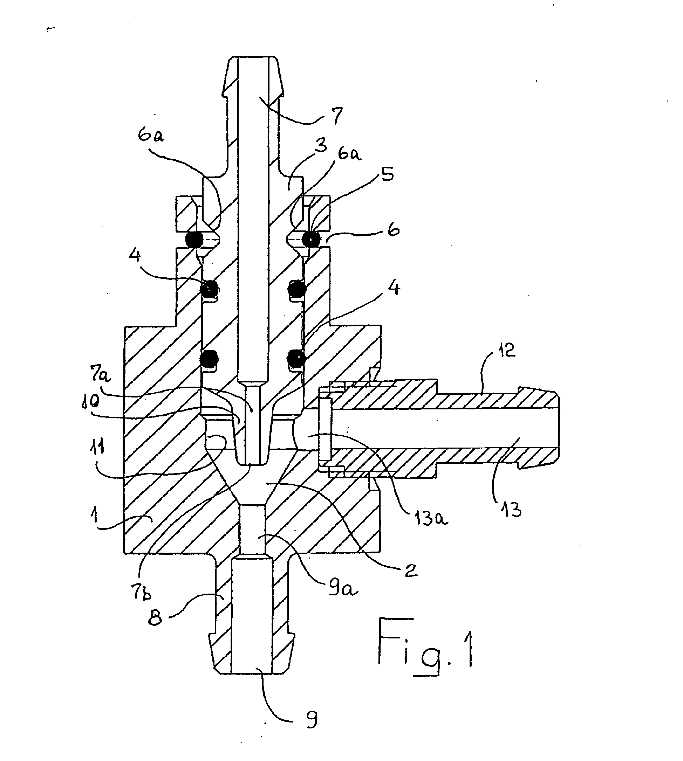

Figure 1 is a longitudinal section through a device for heating a beverage-making liquid according to the invention.

With reference to the drawing, the heating device according to the present invention comprises a body 1 inside which a cavity 2 is formed; the cavity 2 is closed axially by a piston body 3 provided with suitable toroidal seals 4. The body 3 is held in position in the cavity 2, for example, by means of a resilient clip 5 which engages in a groove 6 formed in the body 1 and in a corresponding groove 6a formed in the piston body 3.

The piston body 3 has an axial duct, generally indicated 7, which, according to the invention, is intended to supply a beverage-making liquid into the cavity 2 in order for the liquid to be heated.

The body 1 has a connector 8 provided with an axial duct 9 which is connected to the cavity 2 by means of a portion 9a the internal cross-section of which is smaller than that of the duct 9. In the embodiment shown, the longitudinal axis of the duct 9 is concentric with the longitudinal axis of the duct 7 but, in an alternative embodiment, it may be arranged in a position parallel thereto.

This duct is intended to cause the beverage-making liquid to emerge from the cavity 2 suitably heated, as will become clear from the following description.

The piston body 3 has a jet-shaped extension 10 which extends into the cavity 2 along an axis concentrically coaxial with the axis of the duct 9 and in a position spaced from the cylindrical wall 11 of the cavity 2 so as to leave an annular free space.

A portion 7a of the duct 7 is formed in the extension 10 of the body 3 and, according to the invention, has an internal cross-section which is smaller than the internal cross-section of the rest of the duct 7.

A connector, indicated 12, is also connected to the body 1 of the device and has an internal axial duct 13 opening into the cavity 2 through an opening 13a. This duct 13 is intended to supply to the cavity 2 the steam for heating the beverage-making liquid which is supplied through the duct 7. The position of the connector 12 relative to the body 1 is such that the direction of the steam flow is transverse and preferably perpendicular to the direction of the flow of liquid to be heated coming from the duct 7. According to the embodiment of the invention shown in Figure 1, the steam flows into the annular region of the cavity 2 that is formed around the jet-like extension 10 of the piston body 3.

According to an embodiment not belonging to the invention, the direction of the steam flow may also be inclined to the longitudinal axis of the flow of liquid to be heated, thus flowing into the cavity 2 downstream of the output end 7b of the portion 7a.

With the device according to the invention, all of the desired degrees of heating for a beverage-making liquid such as, for example, water, milk or a flavoured liquor for punch can be achieved in a stable manner, even up to their boiling points, and with the flow-rate required by the particular nature of the hot beverage to be prepared such as, for example, chocolate.

The beverage-making liquid to be heated is caused to flow into the cavity 2 through the duct 7 whilst the steam, which is preferably superheated, is caused to flow into the cavity 2 through the duct 13. The beverage-making liquid is then drawn off from the convergence cavity 2 through the duct 9 which carries it, in conventional manner, towards the device for mixing the liquid with the powder or extract of the particular beverage to be prepared.

In the device of the invention, the cold liquid is injected into the cavity 2 through the portion 7a of the duct 7 with a kinetic energy significantly greater than that of the incident steam coming from the duct 13. The steam is therefore absorbed by the liquid to be heated without problems even when a beverage requiring a low flow-rate of liquid is programmed. In particular, the correct operation of the device according to the invention remains unchanged irrespective of the spatial positioning of the device.

## Claims

1. A device for heating a liquid by means of steam, the device comprising a body (1) defining an internal convergence cavity (2) into which ducts (7, 7a, 13, 14, 9, 9a) open for admitting a flow of liquid to be heated, for admitting a flow of steam, and for drawing off a flow of heated liquid, respectively, the direction of the flow of heated liquid drawn off from the convergence cavity (2) being parallel to the direction of the flow of liquid to be heated admitted to that cavity (2), the device further comprising means for causing the steam to flow into the cavity (2) in a direction arranged transversely relative to the directions of the flows of liquid to be heated and of heated liquid. , **characterized in that** the duct (7) for admitting a flow of liquid to be heated to the convergence cavity comprises an axial portion (10) which extends into the cavity (2) intersecting the axis of the flow of steam that is admitted to that cavity (2).

2. A device according to Claim 1, **characterized in that** the direction of the flow of steam admitted to the convergence cavity (2) is perpendicular to the directions of the flows of the liquid to be heated and of heated liquid.

3. A device according to claims 1 and 2, **characterized in that** the axial portion (10) which extends into the convergence cavity (2) has a duct portion (7a) having an internal cross-section smaller than that of the duct (7) in its portion upstream of the said portion (7a),

4. A device according to any one of Claims 1 to 3, **characterized in that** the duct (9) for drawing off the heated liquid from the convergence cavity (2) has an axial portion (9a) which is adjacent the cavity (2) and which has an internal cross-section smaller than that of the duct (9) downstream of that portion in the direction of output from the device.

5. A device according to any one of Claims 1 to 4, **characterized in that** the convergence cavity (2) has a frustoconical shape in the direction of the flows of liquid to be heated and of heated liquid, with the taper facing towards the heated-liquid outlet duct (9a),

6. A device according to Claim 5, **characterized in that** the convergence cavity (2) has circular cross-sections.

## Patentansprüche

1. Eine Vorrichtung zum Erhitzen einer Flüssigkeit mittels Dampf, wobei die Vorrichtung einen Körper (1) umfaßt, der einen internen Zusammenfluß-Hohlraum (2) definiert, in welchen Kanäle (7,7a,13,14,9,9a) zum Einlassen einer Strömung von zu erhitzender Flüssigkeit, zum Einlassen einer Strömung von Dampf, bzw. zum Abziehen einer Strömung von erhitzter Flüssigkeit öffnen, wobei die Richtung der Strömung von aus dem Zusammenfluß-Hohlraum (2) abgezogener erhitzter Flüssigkeit parallel zu der Richtung der Strömung von zu erhitzender Flüssigkeit, welche in diesen Hohlraum 2 eingelassen wird, ist, wobei die Vorrichtung ferner Mittel aufweist, um zu bewirken, daß der Dampf in den Hohlraum (2) in einer Richtung einströmt, die quer relativ zu den Richtungen der Strömungen von zu erhitzender Flüssigkeit und von erhitzter Flüssigkeit angeordnet ist,
**dadurch gekennzeichnet, daß** der Kanal (7) zum Einlassen einer Strömung von zu erhitzender Flüssigkeit in den Zusammenfluß-Hohlraum einen axialen Abschnitt (10) aufweist, der sich in den Hohlraum (2) erstreckt und die Achse der Dampfströmung, die in den Hohlraum (2) eingelassen wird, schneidet.

2. Eine Vorrichtung gemäß Anspruch 1, **dadurch gekennzeichnet, daß** die Richtung der in den Zusammenfluß-Hohlraum (2) eingelassenen Dampfströmung senkrecht zu den Richtungen der Strömungen der zu erhitzenden Flüssigkeit und der erhitzten Flüssigkeit ist.

3. Eine Vorrichtung gemäß Anspruch 1 oder 2, **dadurch gekennzeichnet, daß** der axiale Abschnitt (10), der sich in den Zusammenfluß-Hohlraum (2) erstreckt, einen Kanalabschnitt (7a) mit einem internen Querschnitt besitzt, der kleiner ist als der des Kanals (7) in dessen Abschnitt stromauf des Abschnitts (7a).

4. Eine Vorrichtung gemäß einem der Ansprüche 1 bis 3, **dadurch gekennzeichnet, daß** der Kanal (9) zum Abziehen der erhitzten Flüssigkeit aus dem Zusammenfluß-Hohlraum (2) einen axialen Abschnitt (9a) besitzt, der sich benachbart den bzw. angrenzend an den Hohlraum (2) befindet und der einen internen Querschnitt besitzt, der kleiner ist als der des Kanals (9) stromab des Abschnitts in der Richtung des Ausgangs aus der Vorrichtung.

5. Eine Vorrichtung gemäß einem der Ansprüche 1 bis 4, **dadurch gekennzeichnet, daß** der Sonnenfluß-Hohlraum (2) eine kegelstumpfförmige Form in der Richtung der Strömungen von zu erhitzender Flüssigkeit und erhitzter Flüssigkeit besitzt, wobei die Abschrägung dem Auslaßkanal (9a) für die erhitzte Flüssigkeit zugewandt ist.

6. Eine Vorrichtung gemäß Anspruch 5, **dadurch gekennzeichnet, daß** der Zusammenfluß-Hohlraum (2) kreisförmige Querschnitte besitzt.

## Revendications

1. Dispositif pour chauffer un liquide à l'aide de vapeur d'eau, le dispositif comprenant un corps (1) définissant une cavité de convergence interne (2) dans laquelle débouchent des conduits (7, 7a, 13, 14, 9, 9a) pour admettre un écoulement de liquide à chauffer, admette un écoulement de vapeur d'eau et aspirer un écoulement de liquide chauffé, respectivement, la direction de l'écoulement de liquide chauffé aspiré de la cavité de convergence (2) étant parallèle à la direction de l'écoulement d'un liquide à chauffer admis dans cette cavité (2), le dispositif comprenant en outre des moyens pour amener la vapeur d'eau à s'écouler dans la cavité (2) dans une direction ménagée transversalement par rapport aux directions des écoulements de liquide à chauffer et de liquide chauffé, **caractérisé en ce que** le conduit (7) pour admettre un écoulement de liquide à chauffer dans la cavité de convergence, comprend une partie axiale (10) qui s'étend dans la cavité (2) en coupant l'axe de l'écoulement de vapeur d'eau qui est admis dans cette cavité (2).

2. Dispositif selon la revendication 1, **caractérisé en ce que** la direction de l'écoulement de vapeur d'eau admis dans la cavité de convergence (2) est perpendiculaire aux directions des écoulements du liquide à chauffer et du liquide chauffé.

3. Dispositif selon les revendications 1 et 2, **caractérisé en ce que** la partie axiale (10), qui s'étend dans la cavité de convergence (2), a une partie de conduit (7a) ayant une coupe transversale interne plus petite que celle du conduit (7) dans sa partie située en amont de ladite partie (7a).

4. Dispositif selon l'une quelconque des revendications 1 à 3, **caractérisé en ce que** le conduit (9) pour aspirer le liquide chauffé de la cavité de convergence (2) a une partie axiale (9a) qui est adjacente à la cavité (2) et qui a une coupe transversale interne plus petite que celle du conduit (9) en aval de cette partie dans le sens de sortie du dispositif.

5. Dispositif selon l'une quelconque des revendications 1 à 4, **caractérisé en ce que** la cavité de convergence (2) a une forme tronconique dans le sens des écoulements de liquide à chauffer et de liquide chauffé, avec la partie amincie tournée vers le conduit de sortie de liquide chauffé (9a).

6. Dispositif selon la revendication 5, **caractérisé en ce que** la cavité de convergence (2) a des coupes transversales circulaires.
